Europäisches Patentamt

European Patent Office

Office européen des brevets

(11) Veröffentlichungsnummer: **0 216 281**
A2

(12) # EUROPÄISCHE PATENTANMELDUNG

(21) Anmeldenummer: 86112681.1

(22) Anmeldetag: 13.09.86

(51) Int. Cl.⁴: **A 61 C 15/00**

(30) Priorität: 18.09.85 DE 3533264

(43) Veröffentlichungstag der Anmeldung:
01.04.87 Patentblatt 87/14

(84) Benannte Vertragsstaaten:
AT BE CH DE FR GB IT LI LU NL SE

(71) Anmelder: VICTORIA Pinselfabrik Friedrich Meier GmbH
& Co. KG
Postfach 1251
D-8809 Bechhofen/Waizendorf(DE)

(72) Erfinder: Fitjer, Holger
Lambrechtstrasse 15
D-8800 Ansbach(DE)

(74) Vertreter: LOUIS, PÖHLAU, LOHRENTZ & SEGETH
Kesslerplatz 1 P.B. 3055
D-8500 Nürnberg(DE)

(54) Vorrichtung zur Zahnpflege.

(57) Es wird eine Vorrichtung zur Zahnpflege beschrieben, mit einem Griffteil (10, 18; 26; 38; 50; 60; 74; 90;112) und mit einem vom Griffteil gehaltenen Zahnpflegeteil (12, 12'). Das Zahnpflegeteil (12, 12') ist ein Schwamm (14), eine Bürste (106) oder eine Düse (108).

FIG.11

EP 0 216 281 A2

Croydon Printing Company Ltd.

## Vorrichtung zur Zahnpflege

Die Erfindung betrifft eine Vorrichtung zur Zahnpflege, mit einem Griffteil und mit einem vom Griffteil gehaltenen Zahnpflegeteil.

Derartige Vorrichtungen sind beispielsweise als Zahnbürsten ausgebildet, wobei das Zahnpflegeteil aus Borsten besteht, die am Griffteil befestigt sind. Mit Zahnbürsten ist es jedoch nur bedingt möglich, die Zwischenräume zwischen den Zähnen zu erreichen, so dass die Zahnpflege noch Wünsche offen lässt. Zur Pflege der Zwischenräume zwischen benachbarten Zähnen sind Mundduschen bekannt, die beispielsweise elektrisch betrieben werden.

Der vorliegenden Erfindung liegt die Aufgabe zugrunde, eine Vorrichtung der eingangs genannten Art zur Zahnpflege zu schaffen, mit der auch die Zwischenräume zwischen benachbarten Zähnen gründlcih gereinigt werden können.

Diese Aufgabe wird erfindungsgemäss dadurch gelöst, dass das Zahnpflegeteil ein Schwamm ist. Ein derartiger Schwamm ist am Griffteil einfacher anzubringen als die Borsten bei einer Zahnbürste, so dass die erfindungsgemässe Vorrichtung einfacher aufgabaut ist als eine Zahnbürste, wie sie bislang zur Zahnpflege verwendet wird.

Es hat sich als vorteilhaft erwiesen, dass das Zahnpflegeteil ein zentrales stiftförmiges Versteifungselement aufweist, das vom Schwamm umgeben ist. Durch das zentrale stiftförmige Versteifungselement ergibt sich eine hohe Formstabilität der erfindungsgemässen Vorrichtung, so dass eine sehr gute Zahnpflege insbesondere auch in den Zwischenräumen zwischen benachbarten Zähnen möglich ist.

Bei der erfindungsgemässen Vorrichtung kann in den Schwamm des Zahnpflegeteils eine Reinigungssubstanz eingelagert sein. Eine derartige Ausbildung der erfindungsgemässen Vorrichtung ist insbesondere dann von Vorteil, wenn die Vorrichtung zum einmaligen Gebrauch vorgesehen ist. Ein derartiger einmaliger Gebrauch ist beispielsweise in Arztpraxen, bei Geschäftsreisen, bei Urlaubsreisen, o.dgl. gegeben. Selbstverständlich ist es auch möglich, den Schwamm des Zahnpflegeteils beim Gebrauch mit einer Zahnpaste zu versehen.

In den Schwamm kann eine durch eine Aktivierungsflüssigkeit aktivierbare Reinigungssubstanz eingelagert sein. Die Aktivierungsflüssigkeit ist dabei an die eingelagerte Reinigungssubstanz angepasst.

Es ist auch möglich, die Aktivierungsflüssigkeit dem Schwamm von ausserhalb der erfindungsgemässen Vorrichtung zuzuführen.

Bei einer bevorzugten Ausführungsform der erfindungsgemässen Vorrichtung ist im Griffteil ein Raum zur Aufnahme eines eine Reinigungssubstanz enthaltenden Behältnisses vorgesehen. Desgleichen ist es möglich, dass im Griffteil der erfindungsgemässen Vorrichtung ein Raum zur Aufnahme eines die Aktivierungsflüssigkeit enthaltenden Behältnisses vorgesehen ist.

Um die Reinigungssubstanz und/oder die Aktivierungsflüssigkeit dem Zahnpflegeteil in Form eines Schwammes zuzuführen, sind verschiedene Ausführungsformen der erfindungsgemässen Vorrichtung möglich. Bei einer dieser möglichen Ausführungsformen ist das Griffteil abknickbar ausgebildet, bildet der Raum zur Aufnahme des Behältnisses ein geschlossenes, mit dem Zannpflegeteil verbundenes Volumen, und ist das Behältnis eine zerbrechbare Ampulle. Durch die abknickbare Ausbildung des Griffteiles, in welchem sich die Ampulle für die Reinigungssubstanz und/oder die Ampulle für die Aktivierungsflüssigkeit befindet, ist es durch Abknicken des Griffteiles möglich, die Ampulle zu zerbrechen, so dass die in der Ampulle befindliche Reinigungssubstanz bzw. Aktiverungsflüssigkeit dem Zahnpflegeteil auf einfache und saubere Weise zugeführt wird.

Bei einer anderen Ausführungsform der erfindungsgemässen Vorrichtung weist das Griffteil in seinem Inneren eine Spitze auf, die zwischen dem Zahnpflegeteil und dem Raum zur Aufnahme des Behältnisses vorgesehen ist und ist das Behältnis mit einer mit der Spitze durchstossbaren Membrane ausgebildet.

Dabei kann das Griffteil zum Einschieben des Behältnisses in einen Aufnahmeraum eine Öffnung aufweisen.

Bei einer anderen Ausführungsform der erfindungsgemässen Vorrichtung weist das Griffteil zur schwenkbaren Verbindung zweier Griffelemente einen Bügel auf,wobei das das Zahnpflegeteil aufweisende Griffelement die Spitze und den Raum zur Aufnahme des Behältnisses aufweist. Nach dem Abknicken der beiden Griffelemente um den Bügel ist es möglich, in den zur Aufnahme des Behältnisses vorgesehenen Raum ein eine Membrane aufweisendes Behältnis derart einzulegen, dass die Membrane des Behältnisses der Spitze zugewandt ist. Anschliessend werden die beiden Griffelemente miteinander fluchtend ausgerichtet, wobei das vom Zahnpflegeteil abgewandte zweite Griffelement das Behältnis gegen die Spitze drückt, so dass die Membrane durchstossen wird und die im Behältnis befindliche Reinigungssubstanz bzw. Aktivierungsflüssigkeit zum Zahnpflegeteil fliesst.

Bei einer Vorrichtung der zuletztgenannten Art kann das vom Zahnpflegeteil abgewandte zweite Griffteil zur Aufnahme eines weiteren Behältnisses vorgesehen sein. Auf diese Weise ist es möglich, ein Behältnis auf Vorrat zu halten.

Bei einer anderen Ausführungsform der erfindungsgemässen Vorrichtung weist das Griffteil zum Einschrauben eines Behältnisses einenSchraubansatz mit einem Innengewinde auf.

Bei einer derartigen Ausbildung der erfindungsgemässen Vorrichtung weist das Behältnis einen zusammendrückbaren Bereich, einen sich an den zusammendrückbaren Bereich anschliessenden, in den Schraubansatz des Griffteiles einschraubbaren Gewindeansatz und einen sich an den Gewindeansatz anschliessenden Halsbereich auf, der durch
eine der Spitze im Griffteil zugewandte Membrane abgeschlossen ist. Dabei kann das Behältnis mit seinem zusammendrückbaren Bereich eine Verängerung des Griffteils bilden.

Bei einer anderen Ausführungsform der erfindungsgemässen Vorrichtung weist das Griffteil ein in axialer Richtung verschiebbar gelagertes Anschlusselement auf, das
mit einer Öffnung versehen ist, die mit der Spitze
fluchtet, und ist das Behältnis mit einem in die Öffnung einsteckbaren Hals ausgebildet, der durch eine
Membrane abgeschlossen ist. Das Behältnis kann dabei
im Anschluss an den Hals einen zusammendrückbaren Bereich aufweisen.

Erfindungsgemäss sit es auch möglich, dass am Griffteil
zwei Zahnpflegeteile befestigt sind, die von den beiden
axialen Enden des Griffteils in entgegengesetzte Richtungen wegstehen. Bei einer derartigen Vorrichtung sind
im Griffteil vorzugsweise zwei Behältnisse vorgesehen,
von denen das eine Behältnis mit dem einen Zahnpflegeteil und das zweite Behältnis mit dem zweiten Zahnpflegeteil verbindbar ist. Eine derartige Vorrichtung weist
den Vorteil auf, dass ihre Einsatzdauer doppelt so lang
ist wie bei einer Vorrichtung mit einem einzigen Zahnpflegeteil.

Bei der erfindungsgemässen Vorrichtung zur Zahnpflege
ist es auch möglich, dass das Zahnpflegeteil ein Rohrelement aufweist, das an seinem einen Ende in eine Bürste,
eine Düse oder einen Schwamm mündet und das an seinem
zweiten Ende ein Verbindungsorgan aufweist, das mit
einem am Griffteil vorgesehenen Behältnis verbindbar ist. Eine derartige Vorrichtung weist den Vorteil auf, dass sie auch als Munddusche verwendet werden kann, so dass eine optimale Zahnpflege möglich ist. Bei dem am Griffteil vorgesehenen Behältnis zur Aufnahme der Reinigungssubstanz bzw. der Aktivierflüssigkeit für die Reinigungssubstanz kann es sich um ein Fläschchen aus Glas oder aus Kunststoff handeln.

Bei der zuletztgenantnen Ausführungsform der erfindungsgemässen Vorrichtung kann das Verbindungsorgan zur Ausgabe der im Behältnis vorgesehenen Reinigungssubstanz bzw. Aktivierflüssigkeit als gegen das Behältnis drückbarer Betätigungsknopf ausgebildet sein. Der Betätigungsknopf dient dazu, im Behältnis einen Überdruck zu erzeugen, durch den die im Behältnis vorhandene Aktivierungsflüssigkeit bzw. Reinigungssubstanz durch das Rohrelement zur Bürste, Düse oder zum Schwamm geleitet wird.

Es hat sich als zweckmässig erwiesen, dass das Rohrelement mit dem Verbindungsorgan um das Griffteil verschwenkbar ausgebildet ist. Durch eine derartige Ausbildung ist es möglich, die erfindungsgemässe Vorrichtung platzsparend zusammenzuschwenken bzw. für den Gebrauch auseinanderzuklappen.

Bei einer einfachen Ausbildung der erfindungsgemässen Vorrichtung, die insbesondere als einmal zu verwendende Wegwerf-Vorrichtung vorgesehen ist, kann das Griffteil einen Abschnitt mit einem Sackloch aufweisen, in das ein Handgriff mit einem Einsteckansatz einsteckbar ist. Eine derartige Vorrichtung weist denVorteil eines einfachen und preisgünstigen Aufbaus auf.

Bei einer anderen einfachen Ausbildung der erfindungsgemässen Vorrichtung weist das Griffteil an dem dem Zahnpflegeteil entgegengesetzten Endabschnitt ein Verdrehteil auf, dessen Achse zum Griffteil senkrecht ausgerichtet ist und an dem ein Handgriff verdrehbar gelagert ist. Eine derartige Vorrichtung ist sehr platzsparend zusammenklappbar, so dass sie sich insbesondere für Geschäfts- bzw. Urlaubsreisen eignet.

Weitere Einzelheiten, Merkmale und Vorteile ergeben sich
aus der nachfolgenden Beschreibung von in der Zeichnung
dargestellten Ausführungsbeispielen der erfindungsgemässen Vorrichtung zur Zahnpflege. Es zeigen:

Fig. 1 einen Längsschnitt durch eine Vorrichtung mit
einem formstabilen Griffteil,

Fig. 2 einen Längsschnitt durch eine Vorrichtung mit
einem knickbaren Griffteil und einer im Griffteil angeordneten zerbrechbaren Ampulle,

Fig. 3 einen Längsschnitt durch eine Vorrichtung, die in
ihrem Griffteil eine Spitze und eine Öffnung zum
Einschieben eines Behältnisses aufweist,

Fig. 4 einen Längsschnitt durch eine Vorrichtung, deren
Griffteil zwei zusammen- und auseinanderklappbare Griffelemente aufweist,

Fig. 5 einen Längsschnitt durch eine Vorrichtung, in deren Griffteil ein Behältnis einschraubbar ist,

Fig. 6 einen Längsschnitt durch eine Vorrichtung, deren
Griffteil ein in axialer Richtugn verschiebbar gelagertes Anschlusselement zur Aufnahme eines Behältnisses aufweist,

Fig. 7 eine Vorrichtung, an deren Griffteil zwei Zahnpflegeteile befestigt sind, die in entgegengesetzte Richtungen weisen,

Fig. 8 eine in einer Verpackung gelagerte Vorrichtung zur Zahnpflege, die mit einem Handgriff verbindbar ist, in einem Längsschnitt,

Fig. 9 eine Ansicht einerVerpackung, in der zwei Vorrichtungen und ein Handgriff untergebracht sind, in Blickrichtung des Pfeiles IX aus Fig.8,

Fig.10 eine räumliche Darstellung einer eine Vorrichtung enthaltenden Verpackung gemäss Fig. 8 o. 9,

Fig.11 eine Vorrichtung mit einem zusammenklappbaren Griffteil in der auseinandergeschwenkten Gebrauchsstellung,

Fig.12 eine der Fig. 11 entsprechende Vorrichtung in der zusammengeklappten Stellung,

Fig.13 eine Vorrichtung gem. Fig. 12, die in einem Behälter angeordnet ist, der eine Reinigungssubstanz und/oder eine Aktiverungsflüssigkeit für die Reinigungssubstanz enthält,

Fig.14 eine der Fig. 13 entsprechende räumliche Darstellung einer mit einem Behälter für die Flüssigkeiten kombinierten Vorrichtung zur Zahnpflege,

Fig.15 eine räumliche Darstellung des Behälters gemäss Fig. 13 und 14 für die Flüssigkeiten,

Fig.16 einen Längsschnitt durch eine weitere Ausführungsform einer erfindungsgemässen Vorrichtung zur Zahnpflege,

Fig.17 eine Vorrichtung gem. Fig. 16 mit einer Bürste in
räumlicher Darstellung,

Fig.18 eine Vorrichtung gem. Fig. 17 mit einer Munddusche in der zusammengeklappten Ruhestellung,
und

Fig.19 einen Abschnitt einer Vorrichtung gem. Fig.16
mit einem am Vorderende eines Rohrelementes angeordneten Schwamm.


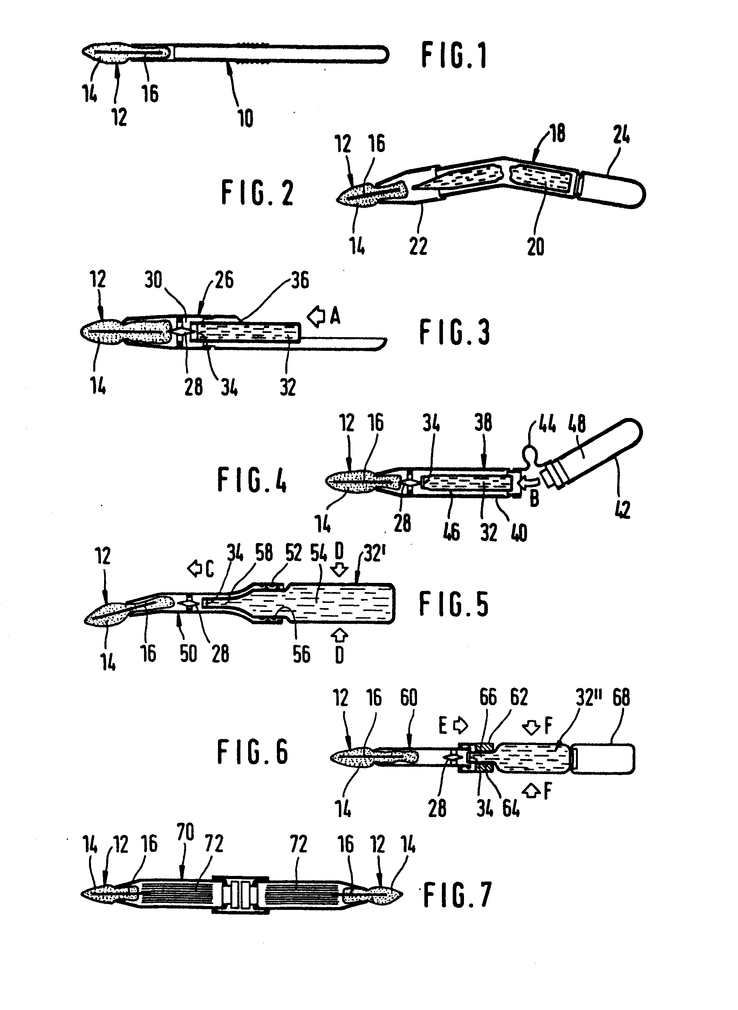

Fig. 1 zeigt eine Vorrichtung zur Zahnpflege mit einem
formstabilen Griffteil 10 und mit einem vom Griffteil
vorgesehenen Zahnpflegeteil 12. Am Griffteil 10 ist das
Zahnpflegeteil 12 in Form eines Schwammes befestigt,der
über das Griffteil 10 vorsteht. Das Zahnpflegeteil 12
weist ein zentrales stiftförmiges Versteifungselement 16
auf, das vom Schwamm 14 umgeben ist. In dem Schwamm 14
des Zahnpflegeteiles 12 kann eine Reinigungssubstanz
eingelagert sein.

Fig. 2 zeigt eine Vorrichtung zur Zahnpflege, deren
Griffteil 18 abknickbar ausgebildet ist. Im Griffteil 18
ist ein Behältnis 20 angeordnet, das als zerbrechbare
Ampulle ausgebildet ist. In dieser Figur ist die Ampulle
bei abgeknicktem Griffteil 18 zerbrochen dargestellt,
so dass beispielsweise die im Behältnis 20 vorhandene
Aktivierungsflüssigkeit für die im Schwamm 14 des Zahnpflegeteils 12 eingelagerte Reinigungssubstanz in den
Hohlraum des Griffteils 18 und von dort in den Schwamm
14 des Zahnpflegeteils 12 eindringt. Mit der Bezugsziffer 16 ist auch in dieser Figur das zentrale stiftförmige Versteifungselemente bezeichnet, das vom Schwamm
14 allseitig umgeben ist. Das abknickbare Griffteil 18 weist an seinem dem Zahnpflegeteil 12 benachbarten Vorderende ein Halteteil 22 und an seinem zum Halteteil 22 entgegengesetzten Ende ein Verlängerungsteil 24 auf.

Fig. 3 zeigt eine Vorrichtung zur Zahnpflege, deren Griffteil 26 im Inneren eine Spitze 28 aufweist. Die Spitze 28 ist zwischen dem Zahnpflegeteil 12 und dem Raum 30 zur Aufnahme des Behältnisses 32 vorgesehen, wobei das Behältnis 32 mit einer Membrane 34 versehen ist. Das Griffteil 26 weist zum Einschieben des Behältnisses 32 in Richtung des Pfeiles A in den Raum 30 eine Öffnung 36 auf. Wenn das Behältnis 32, das beispielsweise eine Aktivierungsflüssigkeit für die im Schwamm 14 des Zahnpflegeteils 12 eingelagerte Reinigungssubstanz enthält, in Richtung des Pfeiles A gegen die Spitze 28 gedrückt wird, durchdringt die Spitze 28 die Membrane 34, so dass die im Behältnis 32 vorhandene Aktivierungsflüssigkeit in den Schwamm 14 eindringen kann. Damit in diesem Zustand zwischen dem Behältnis 32 und dem Griffteil 26 eine dichte Verbindung hergestellt wird, ist die Spitze 28 an einer Öffnung angeordnet, die mit dem Behältnis 32 im eingeschobenen Zustand dicht abschliesst.

Fig. 4 zeigt eine weitere Ausführungsform einer erfindungsgemässen Vorrichtung, bei der das Griffteil 38 zwei Griffelemente 40 und 42 aufweist, die mittels eines Bügels 44 miteinander verbunden sind. Das Griffelement 40, das an seiner Vorderseite das Zahnpflegeteil 12 mit dem Schwamm 14 und dem zentralen stiftförmigen Versteifungselement 16 aufweist, ist mit einer Spitze 28 versehen. Das Griffelement 40 ist ausserdem mit einem Raum 46 ausgebildet, der zur Aufnahme eines Behältnisses 32 vorgesehen ist. Das Behältnis 32 weist an seiner der Spitze 28 zugewandten Stirnseite eine

Membrane 34 auf, die mit der Spitze 28 durchstochen werden kann. Das geschieht mittels des zweiten Griffelementes 42, das in Richtung des Pfeiles B gegen das Behältnis 32 geschwenkt wird.

Fig. 5 zeigt eine Vorrichtung mit einem Griffteil 50, das an dem dem Zahnpflegeteil 12 entgegengesetzten Ende einen Schraubansatz 52 aufweist. Mit der Bezugsziffer 14 ist auch in dieser Figur ein Schwamm und mit der Bezugsziffer 16 ein zentrales stiftförmiges Versteifungselement des Zahnpflegeteiles 12 bezeichnet. Das Griffteil 50 weist in seinem Inneren eine Spitze 28 auf, mit deren Hilfe eine an der Vorderseite des Behältnisses 32' befindliche Membrane 34 durchstechbar ist. DasBehältnis 32' weist einen zusammendrückbaren Bereich 54, einen sich daran anschliessenden und in den Schraubansatz 52 des Griffteils 50 einschraubbaren Gewindeansatz 56 sowie einen sich an den Gewindeansatz 56 anschliessenden Halsbereich 58 auf, der durch die Membrane 34 abgeschlossen ist. Nach dem Einschrauben des Gewindeansatzes 56 in den Schraubansatz 52 des Griffteils 50 in Richtung des Pfeiles C durchdringt die Spitze 28 die Membrane 34 des Behältnisses 32', so dass die im Behältnis 32' befindliche Flüssigkeit in den Schwamm 14 des Zahnpflegeteiles 12 eindringen kann. Zu diesem Zweck wird das Behältnis 32' an seinem zusammendrückbaren Bereich in Richtung der Pfeile D zusammengedrückt.

Fig. 6 zeigt eine Vorrichtung mit einem Griffteil 60, das an seinem einen Ende mit dem Zahnpflegeteil 12 und an seinem gegenüberliegenden Ende mit einem Anschlusselement 62 versehen ist, das am Griffteil 60 in axialer Richtung verschiebbar gelagert ist. Die verschiebbare Lagerung des Anschlusselemenges 62 ist durch den Pfeil E angedeutet. Das Anschlusselement 62 ist mit einer Öff-

nung 64 versehen, die mit der im Inneren des Griffteiles 60 vorgesehenen Spitze 28 fluchtet. In die Öffnung 64 des Anschlusselementes 62 ist ein Behältnis
32'' mit seinem Hals 66 eingesteckt. Der Hals 66 des
Behältnisses 32'' weist an seiner der Spitze 28 zugewandten Stirnseite eine Membrane 34 auf, die mit der
Spitze 28 durchstossbar ist. Zu diesem Zweck wird das
Anschlusselement 62 in der zum Pfeil E entgegengesetzten Richtung auf dem Griffteil 60 axial verschoben. Anschliessend kann das mit dem Anschlusselement
62 fest verbundene Behältnis 32'' in Richtung der
Pfeile F zusammengedrückt werden, so dass die im Behältnis 32'' befindliche Flüssigkeit zum Schwamm 14
vordringt und den Schwamm 14, in dem die Reinigungssubstanz eingelagert sein kann, durchtränkt. Mit der
Bezugsziffer 16 ist auch in dieser Figur das zentrale
stiftförmige Versteifungselement des Zahnpflegeteiles
12 bezeichnet. Das Behältnis 32'' weist ein Verlängerungsteil 68 aus einem formstabilen Material auf.

Fig. 7 zeigt eine Vorrichtung, bei der im Griffteil 70
zwei Behältnisse 72 vorgesehen sind, von denen jedes
mit je einem Zahnpflegeteil 12 verbindbar ist. Jedes
Zahnpflegeteil 12 weist einen Schwamm 14 und ein zentrales stiftförmiges Versteifungselement 16 auf.

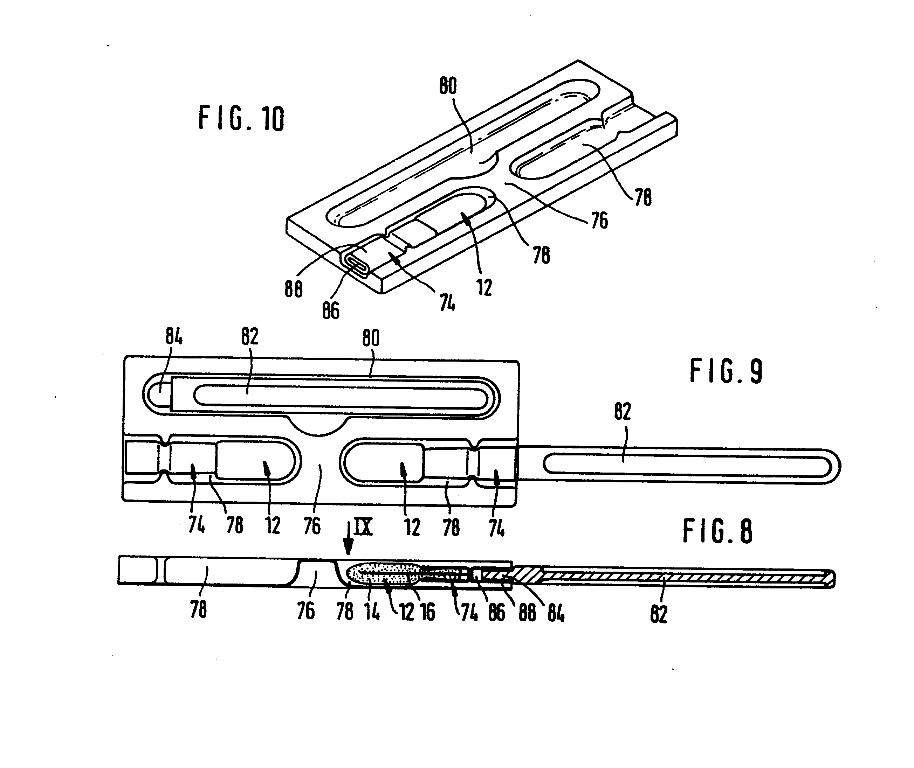

Die Figuren 8 und 9 zeigen eine Vorrichtung zur Zahnpflege, wobei in Fig. 8 ein Griffteil 74 mit einem einen
Schwamm 14 und ein stiftförmiges Versteifungselement
16 aufweisenden Zahnpflegeteil 12 in einer Verpackung
76 gelagert ist. In Fig. 9 sind in der Verpackung 76
zwei Vorrichtungen zur Zahnpflege in Ausnehmungen 78
gelagert. In einer weiteren Ausnehmung 80 ist ein Handgriff 82 gelagert, der einen Einsteckansatz 84 aufweist.
Wie aus Fig. 8 deutlich ersichtlich ist, ist der Handgriff 82 mit seinem Einsteckansatz 84 in ein Sackloch 86 einsteckbar, das in einem Abschnitt 88 des Griffteils 74 vorgesehen ist.

Fig. 10 zeigt die Verpackung 76 mit den Ausnehmungen 78 für zwei Vorrichtungen zur Zahnpflege und mit einer Ausnehmung 80 für einen Handgriff in einer räumlichen Darstellung. In einer der Ausnehmungen 78 ist eine Vorrichtung zur Zahnpflege untergebracht, bei der das Zahnpflegeteil 12 über das Griffteil 74 vorsteht. Mit der Bezugsziffer 86 ist in dieser Figur das im Abschnitt 88 vorgesehene Sackloch zum Einstecken des Einsteckansatzes 84 eines der Handgriffe 82 bezeichnet.

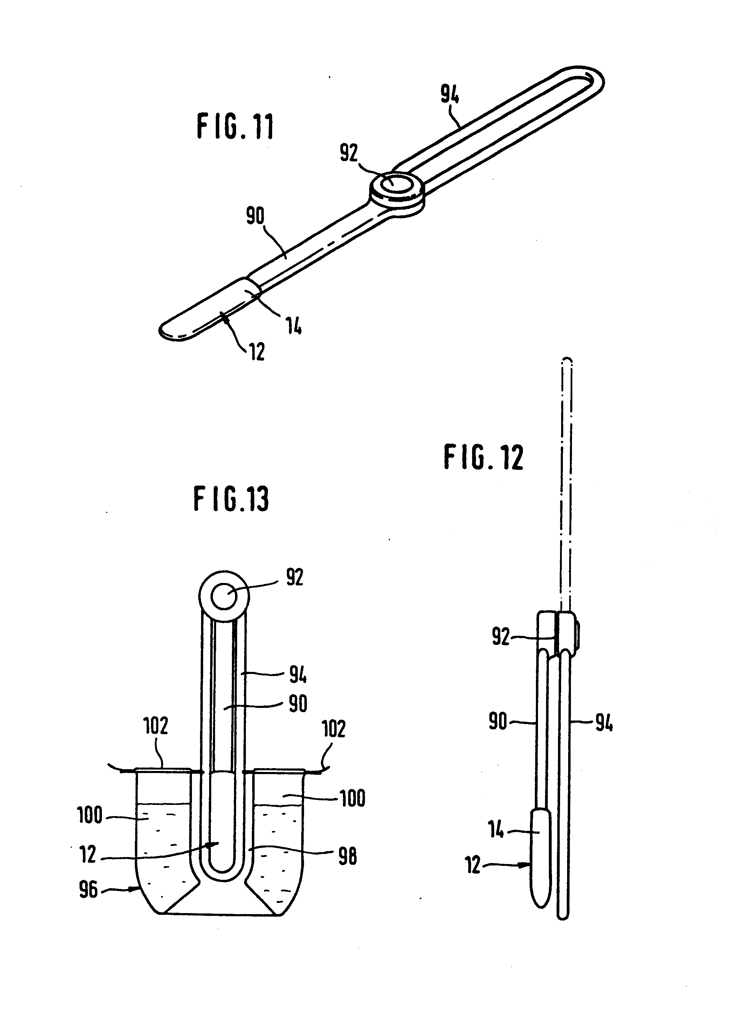

Die Figuren 11 bis 14 zeigen eine Vorrichtung zur Zahnpflege mit einem Griffteil 90 und einem Zahnpflegeteil 12, das einen Schwamm 14 aufweist. Das Griffteil 90 weist an dem dem Zahnpflegeteil 12 entgegengesetzten Endabschnitt ein Verdrehteil 92 auf, dessen Achse zum Griffteil 90 senkrecht ausgerichtet ist. Um das Verdrehteil 92 ist ein Handgriff 94 verdrehbar gelagert. In Fig. 11 ist eine Vorrichtung in der Gebrauchsstellung dargestellt und in Fig. 12 in der zusammengeklappten Stellung. In Fig. 12 ist die Gebrauchsstellung mit strichlierten Linien angedeutet.

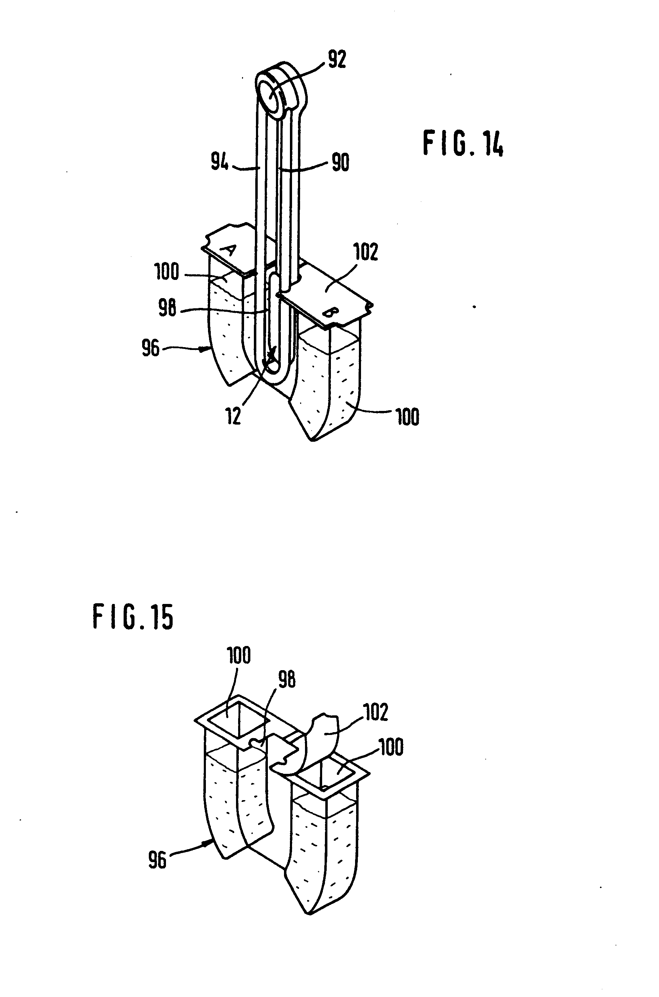

Die Figuren 13 und 14 zeigen eine Vorrichtung gemäss Fig. 12, wobei das Griffteil 90 mit dem Zahnpflegeteil 12 und der um das Verdrehteil 92 zusammengeklappte Handgriff 94 in einen Behälter 96 eingesteckt ist. Zu diesem Zweck weist der Behälter 96 eine Ausnehmung 98 auf, die aus Fig. 15 deutlich ersichtlich ist. Der Behälter 96 weist zwei Räume 100 auf, die die Reinigungssubstanz und/oder die Aktivierungsflüssigkeit für die Reinigungssubstanz enthalten können. Der Behälter 96 ist auf seiner Oberseite mit einer Folie 102 versehen, welche die Räume 100 bis zur Verwendung der Vorrichtung dicht ab- schliesst, wie insbes. aus Fig. 14 ersichtlich ist.

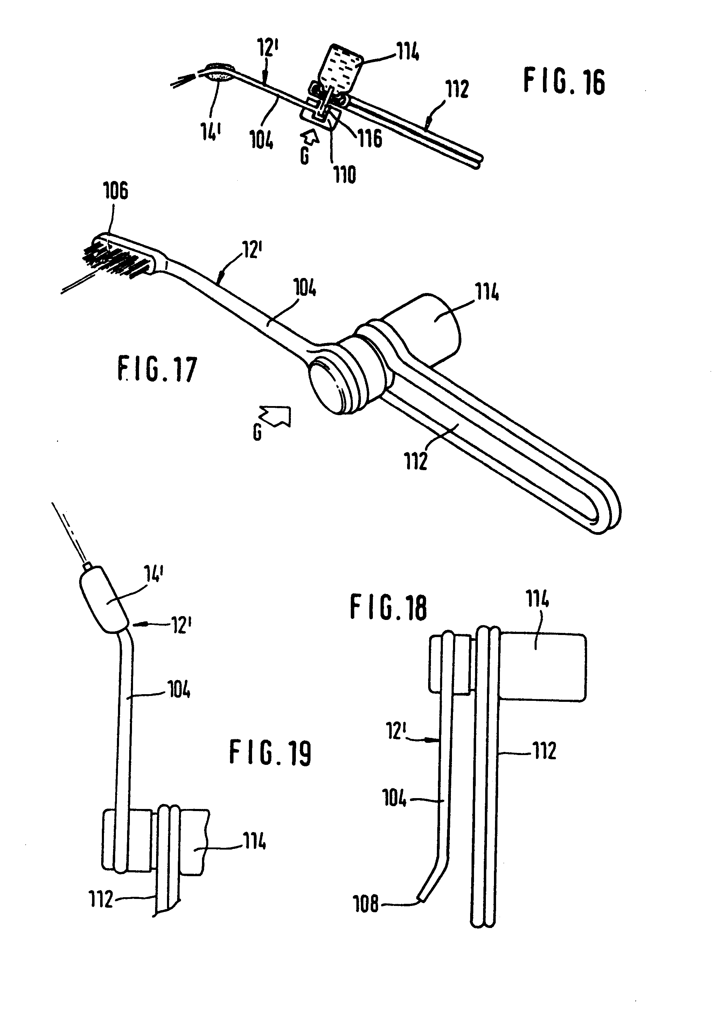

Die Figuren 16 bis 19 zeigen eine Ausführungsform einer Vorrichtung zur Zahnpflege, bei der das Zahnpflegeteil 12' ein Rohrelement 104 aufweist. Das Rohrelement 104 weist an seinem einen Ende eine Bürste 106 (sh.Fig.17), eine Düse 108 (sh. Fig. 18), oder einen Schwamm 14' (sh.Figuren 16 und 19), auf. Das Rohrelement 104 weist an seinem zweiten Ende ein Verbindungsorgan 110 auf, das mit einem am Griffteil 112 vorgesehenen Behältnis 114 verbindbar ist. Das Behältnis 114 kann als Fläschchen ausgebildet sein, das ein Rohr 116 aufweist, wobei sich das Rohr 116 durch das Griffteil 112 hindurcherstreckt und über das Griffteil 112 übersteht. Auf das Rohr 116 ist das Verbindungsorgan 110 derart aufgesteckt, dass zwischen dem Behältnis 114 und der Düse 108 oder der Bürste 106 eine Verbindung hergestellt ist. Das Verbindungsorgan 110 kann als gegen das Behältnis 114 drückbarer Betätigungsknopf ausgebildet sein. Die Betätigung des Betätigungsknopfes ist in den Figuren 16 und 17 durch den Pfeil G angedeutet. In den Figuren 16, 17 und 19 ist die Vorrichtung zur Zahnpflege in der Gebrauchsstellung dargestellt, während sie in der Fig.18 in der zusammengeklappten Ruhestellung dargestellt ist.

A N S P R Ü C H E :

1. Vorrichtung zur Zahnpflege mit einem Griffteil (10; 18; 26; 38; 50; 60; 70; 74; 90) und mit einem vom Griffteil vorgesehenen Zahnpflegeteil (12), d a d u r c h   g e k e n n z e i c h n e t , dass das Zahnpflegeteil (12) ein Schwamm (14) ist.

2. Vorrichtung nach Anspruch 1, dadurch gekennzeichnet, dass das Zahnpflegeteil (12) ein zentrales stiftförmiges Versteifungselement (16) aufweist, das vom Schwamm (14) umgeben ist.

3. Vorrichtung nach Anspruch 1 oder 2, dadurch gekennzeichnet, dass in den Schwamm (14) des Zahnpflegeteiles (12) eine Reinigungssubstanz eingelagert ist.

4. Vorrichtung nach Anspruch 3, dadurch gekennzeichnet, dass in den Schwamm (14) eine durch eine Aktivierungsflüssigkeit aktivierbare Reinigungssubstanz eingelagert ist.

5. Vorrichtung nach Anspruch 1 oder 2, dadurch gekennzeichnet, dass im Griffteil (18; 26; 38; 50; 60; 70) ein Raum zur Aufnahme eines eine Reinigungssubstanz enthaltenden Behältnisses (20; 32; 32'; 32''; 72) vorgesehen ist.

6. Vorrichtung nach einem der Ansprüche 1 bis 4, dadurch gekennzeichnet, dass im Griffteil (18; 26; 38; 50; 60; 70) ein Raum zur Aufnahme eines die Aktivierungsflüssigkeit enthaltenden Behältnisses (20; 32; 32', 32''; 72) vorgesehen ist.

7. Vorrichtung nach Anspruch 5 oder 6, dadurch gekennzeichnet, dass das Griffteil (18) abknickbar ausgebildet ist, dass der Raum zur Aufnahme desBehältnisses (20) ein geschlossenes, mit dem Zahnpflegeteil (12) verbundenes Volumen bildet, und dass das Behältnis (20) eine zerbrechbare Ampulle ist.

8. Vorrichtung nach Anspruch 5 oder 6, dadurch gekennzeichnet, dass das Griffteil (26; 38; 50; 60) in seinem Inneren eine Spitze (28) aufweist, die zwischen dem Zahnpflegeteil (12) und dem Raum zur Aufnahme des Behältnisses (32; 32', 32'') vorgesehen ist, und dass das Behältnis mit einer mit der Spitze (28) durchstossbaren Membrane (34) ausgebildet ist.

9. Vorrichtung nach Anspruch 8, dadurch gekennzeichnet, dass das Griffteil (26) zum Einschieben des Behältnisses (32) in einem Aufnahmeraum (30) eine Öffnung (36) aufweist.

10. Vorrichtung nach Anspruch 8, dadurch gekennzeichnet, dass das Grifft eil (38) zur schwenkbaren Verbindung zweier Griffelemente (40, 42) einen Bügel (44) aufweist, wobei das das Zahnpflegeteil (12) aufweisende Griffelement (40) die Spitze (28) und den Raum zur Aufnahme des Behältnisses (32) aufweist.

11. Vorrichtung nach Anspruch 10, dadurch gekennzeichnet, dass das vom Zahnpflegeteil (12) abgewandte zweite Griffelement (42) zur Aufnahme eines weiteren Behältnisses vorgesehen ist.

12. Vorrichtung nach Anspruch 8, dadurch gekennzeichnet, dass das Griffteil (50) zum Einschrauben einesBehältnisses (32') einen Schraubansatz (52) mit einem Innengewinde aufweist.

13. Vorrichtung nach Anspruch 12, dadurch gekennzeichnet, dass das Behältnis (32') einen zusammendrückbaren Bereich (54), einen sich an den zusammendrückenden Bereich (54) anschliessenden, in den Schraubansatz (52) des Griffteils (50) einschraubbaren Gewindeansatz (56) und einen sich an den Gewindeansatz (56) anschliessenden Halsbereich (58) aufweist, der durch eine der Spitze (28) im Griffteil (50) zugewandte Membrane (34) abgeschlossen ist.

14. Vorrichtung nach Ansprhch 8, dadurch gekennzeichnet, dass das Griffteil (50) ein in axialer Richtung verschiebbar gelagertes Anschlusselement (62) aufweist, das m it einer Öffnung (64) versehen ist, die mit der Spitze (28) fluchtet, und dass das Behältnis (32'') mit einem in die Öffnung (64) einsteckbaren Hals (66) ausgebildet ist, der durch eine Membrane (34) abgeschlossen ist.

15. Vorrichtung nach Anspruch 14, dadurch gekennzeichnet, dass das Behältnis (32'') im Anschluss an den Hals (66) einen zusammendrückbaren Bereich aufweist.

16. Vorrichtung nach einem der Ansprüche 1 bis 4, dadurch gekennzeichnet, dass am Griffteil (70) zwei Zahnpflegeteile (12) befestigt sind, die von den beiden axialen Enden des Griffteils (70) in entgegengesetzte Richtungen wegstehen.

17. Vorrichtung nach Anspruch 16, dadurch gekennzeichnet, dass im Griffteil (70) zwei Behältnisse (72) vorgesehen sind, von denen das eine Behältnis mit dem einen Zahnpflegeteil (12) und das zweite Behältnis (72) mit dem zweiten Zahnpflegeteil (12) verbindbar ist.

18. Vorrichtung nach dem Oberbegriff des Anspruchs 1, dadurch gekennzeichnet, dass das Zahnpflegeteil (12') ein Rohrelement (104) aufweist, das an seinem einen Ende in eine Bürste (106), eine Düse (108) oder einen Schwamm (14') mündet, und das an seinem zweiten Ende ein Verbindungsorgan (110) aufweist, das mit einem am Griffteil (112) vorgesehenen Behältnis (114) verbindbar ist.

19. Vorrichtung nach Anspruch 18, dadurch gekennzeichnet, dass das Verbindungsorgan (110) zur Ausgabe der im Behältnis (114) vorgesehenen Reinigungssubstanz bzw. Aktivierflüssigkeit als gegen das Behältnis (114) drückbarer Betätigungsknopf ausgebildet ist.

20. Vorrichtung nach Anspruch 18 oder 19, dadurch gekennzeichnet, dass das Rohrelement (104) mit dem Verbindungsorgan (110) um das Griffteil (112) verschwenkbar ausgebildet ist.

21. Vorrichtung nach Anspruch 1, dadurch gekennzeichnet, dass das Griffteil (74) einen Abschnitt (88) mit einem Sackloch (86) aufweist, in das ein Handgriff (82) mit einem Einsteckansatz (84) einsteckbar ist.

22. Vorrichtung nach Anspruch 1, dadurch gekennzeichnet, dass das Griffteil (90) an dem dem Zahnpflegeteil (12) entgegengesetzten Endabschnitten ein Verdrehteil (92) aufweist, dessen Achse zum Griffteil (90) senkrecht ausgerichtet ist und an dem ein Handgriff (94) verdrehbar gelagert ist.

FIG.1

FIG.2

FIG.3

FIG.4

FIG.5

FIG.6

FIG.7

FIG. 10

FIG. 9

FIG. 8

FIG. 11

FIG. 12

FIG. 13

FIG.14

FIG.15

0216281

FIG. 16

FIG. 17

FIG. 18

FIG. 19